# EUROPEAN PATENT APPLICATION

(11) **EP 2 330 525 A1**
(43) Date of publication of application: **08.06.2011**
(21) Application number: 09817211.7
(22) Date of filing: 03.09.2009
(51) Int. Cl.: G06F 19/00

(54) **PARALLEL COMPUTING METHOD AND COMPUTING PLATFORM FOR SECURITY AND STABILITY ANALYSIS OF LARGE POWER GRID**

(30) Priority: 27.09.2008 CN 200810168190
(71) Applicant: State Grid Corporation of China, Beijing 100031 (CN)
(72) Inventor: XIN, Yaozhong, Beijing 100031 (CN); CHEN, Yong, Beijing 100031 (CN); TAO, Hongzhu, Beijing 100031 (CN); YAN, Jianfeng, Beijing 100031 (CN); LI, Yisong, Beijing 100031 (CN); NAN, Guilin, Beijing 100031 (CN)
(74) Representative: Kling, Simone
(86) International application number: PCT/CN2009/073712
(87) International publication number: WO 2010/037297

(57) **Abstract**

A parallel computing method and a computing platform for the security and stability analysis of the large power grid are provided, which can solve the problem that the efficiency of the computational analysis in the prior art is lower. The parallel computing method includes: dividing the computing task into at least two task sets, and distributing the task sets and the fixed data corresponding to task sets to respective computational nodes; sending operating data of the power grid to each computational node; performing parallel computing by each computational node based on the operating data of the power grid and the fixed data. The computing platform includes: a management node and computational nodes. According to the invention, safety and stability analysis of large-scale power grids can be performed based on data broadcasting, task pre-distribution, sequential control and utilization of large-scale parallel algorithms. By means of the combination of task-based parallel computing and grid-based parallel computing, the complexity of the task scheduling can be simplified, the stability of the system can be improved, and a technical leap from off-line computation of power systems to online analyzing can be achieved.

## Description

This application claims the benefit of Chinese Patent Application No. 200810168190.2, entitled "Parallel Computing Method and Computing Platform for Safety and Stability Analysis of Large-scale Power Grid" filed on September 27, 2008, which is incorporated herein by reference in its entirety.

### FIELD OF THE INVENTION

The present invention relates to computing technologies, and more particularly to a parallel computing method and a computing platform for safety and stability analysis of large-scale power grid.

### BACKGROUND OF THE INVENTION

In existing power systems, power grids are interconnected across regions to form a large-scale and wide-coverage power system in order to supply complementary power for other regions. For stable operation of the power system, those power grids should function cooperatively. However, due to various reasons such as natural hazards and unexpected events, the operating status of the power grids may be changed, which may further affect safe operation of the whole power system.

To solve this problem, in the prior art, the operating status of the power system is computed and analyzed by using a grid-based parallel computing mode and a task-based parallel computing mode according to power operating data and fixed data, the safety and stability of the power system is determined based on such computing and analysis results, and then the power operating data of the power system will be adjusted to ensure safe and stable operation of the power system.

The grid-based parallel computing mode is to divide a power system to be analyzed into sub-grids, perform computation of each sub-grid on a different processor, and coordinate the computations on the processors by communication, so as to accomplish the stability analysis of the power system. Consequently, such mode can effectively reduce computing time for the stability analysis of a single power system. Although the mode can effectively reduce computing time for the stability analysis of a single power system when the number of computational nodes is small, however, as the number of computational nodes increases, computing efficiency of the grid-based parallel computing mode deteriorates, what's more, there is a bottleneck of improving the computing efficiency.

The task-based parallel computing mode is to divide tasks to be analyzed into sets, distribute tasks of a set by a management node to an idle computational node, which performs the computing task and returns a computing result to the management node, and then distribute a new task. In this mode, the management node and the computational node cooperate by communication and perform all tasks for the stability analysis of the power system together, which effectively reduce computing time for the stability analysis of the power system. Such mode may be valuable in the application when the number of computational nodes is small and the computing time is not limited, however, when the number of the computational nodes is large or the nodes are used in online computing, due to significant amount of time spent on the point-to-point communication mechanism and task distribution as well as scheduling, the task-based parallel computing mode may lead to poor computing efficiency and may not meet the requirement on computing time.

Generally speaking, the computing and analyzing methods in the prior art have the problem of poor computing efficiency, and can not meet the requirement on stable operation of power systems.

### SUMMARY OF THE INVENTION

Embodiments of the present invention provide a parallel computing method and computing platform for safety and stability analysis of large-scale power grids, which may solve the problem of poor computing efficiency in the prior art.

An embodiment of the invention provides a parallel computing method for safety and stability analysis of a large-scale power grid, including:
dividing computing tasks into at least two task sets, and distributing the at least two task sets and fixed data corresponding to the task sets to respective computational nodes;
sending power grid operating data to the computational nodes; and
performing parallel computing by the computational nodes, based on the power grid operating data and the fixed data.

The step of dividing computing tasks into at least two task sets and distributing the at least two task sets and fixed data corresponding to the task sets to respective computational nodes includes:
making statistics of computing environment information of each computational node;
pre-distributing a computing task to each computational node based on the computing environment information; and
pre-distributing the fixed data to each of the computational nodes.

Following the step of performing parallel computing by the computational nodes, based on the power grid operating data and the fixed data, the method further includes:
sending parallel computing results to a management node by the computational nodes.

The step of sending power grid operating data to the computational nodes includes: sending the power grid operating data to the computational nodes using User Datagram Protocol by means of broadcasting or multicasting.

An embodiment of the invention provides a computing platform, including a management node and computational nodes;
the management node is used for obtaining power grid operating data, and sending the power grid operating data to the computational nodes;
the computational nodes are used for configuring a task table and fixed data corresponding to respective tasks in the task table, and performing a task according to the power grid operating data sent by the management node and the fixed data.

The computational nodes are further used for sending results from the performed tasks to the management node.

According to an embodiment of the invention, safety and stability analysis of large-scale power grids may be performed based on data broadcasting, task pre-distribution, scheduling control and utilization of large-scale parallel algorithms. By combining the task-based parallel computing mode and the grid-based computing mode, the complexity of task scheduling can be simplified, the stability of the system can be improved, and a technical leap from off-line computation of power systems to online analyzing can be achieved. For example, for 1440 times of 20-second-long transient stability computations in a 10000-node-level power grid with 96 computational nodes, 384 computing cores (4 computing cores per computational node), analyzing time of the power system is reduced from 12 hours with off-line serial computation to 2 minutes with online parallel computation, which is about 360 times faster in computing velocity. The problem that a system has both highly integrated various application software and high speed computing ability can be solved, and scheduling mechanism online tracking and analyzing the safety status of power grids can be realized, which results in revolutionary effects on scheduling and operation of power grids.

### BRIEF DESCRIPTION OF THE DRAWINGS

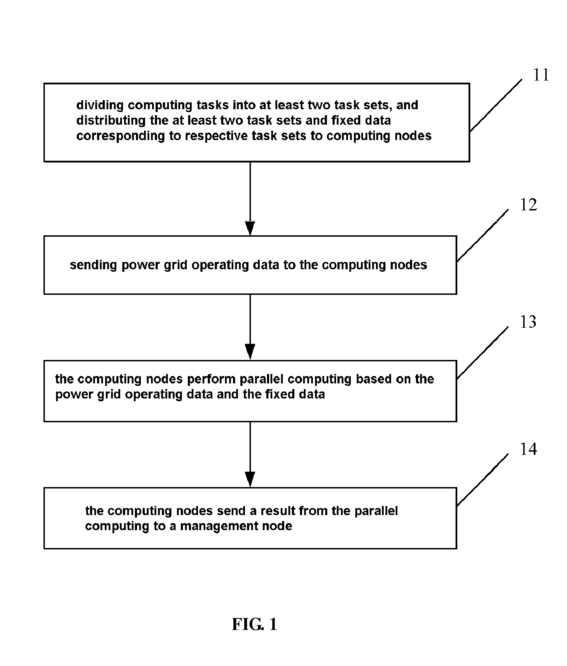

Figure 1 illustrates a parallel computing method for safety and stability analysis of a large-scale power grid according to a first embodiment of the invention.

### DETAILED DESCRIPTION OF THE EMBODIMENTS

For understanding and implementing the invention by those skilled in the art, embodiments of the invention are described hereinafter with reference to the drawing.

A First Embodiment

As shown in Figure 1, the embodiment provides a parallel computing method for safety and stability analysis of a large-scale power grid, including the following steps.

Step 11: dividing computing tasks into at least two task sets, and distributing the at least two task sets and fixed data corresponding to the at least two task sets to respective computational nodes; this step is also called a computing task pre-distribution process.

The computing task pre-distribution process includes three steps:

(1) Initialization of a pre-distribution environment, that's to say, to make statistics of computing environment information of each computational node, including types of CPUs, the number of CPUs, storage capacity of a memory, etc. All the parameter information can be used as a basis for the pre-distribution.

(2) Pre-distribution of the computing tasks;

The pre-distribution of the computing tasks is to make a plan to distribute the computing tasks based on the computing environment information of the computational nodes and according to hardware attributes of each computational node, evenly distribute the computing tasks based on a shortest-computing-time principle, form a task pre-distribution table based on the distribution result, and send it to each computational node. The task pre-distribution table includes types of computing tasks, the number of computing tasks, the number of computing processes and a sequence of computation. During starting-up and initializing an online computing platform, each computational node reads the task pre-distribution table once the parallel computing platform starts up, and initializes a computing process stored in the memory according to a task distribution situation. The types of computing tasks and the number of computing tasks for respective computational nodes are fixed in each cycle. Therefore, the time for data transmission and task distribution in computation is reduced, and computing efficiency is improved.

(3) Pre-distribution of fixed data.

The input data needed for safety and stability analysis of a power system are divided into two parts, i.e., fixed data and power grid operating data. A fixed data file mainly includes constant data for computing tasks of the same type, such as element attributes, etc. The fixed data is pre-stored at the respective nodes for subsequent computation in the step of pre-distribution of fixed data. During the process of computation, the fixed data can be no longer transmitted due to the pre-distribution, which significantly reduces the time of data transmission and improves the computing efficiency.

The fixed data pre-distributed to the computational nodes includes:

(1) a transient stability failure list which includes configurations for each transient stability computation, and new potential failures due to some transient filtering method;

(2) a voltage stability computing configuration which includes configuration items from a parameter for voltage stability computation, an adjustment volume and an adjustment method;

(3) a small signal stability computing configuration which includes computing configuration items for small signal stability computation and the number of sub-nodes, etc.;

(4) a steady-state safety analysis computing configuration which includes configuration items for the scope of N-1 search and other computing parameters; and

(5) a dynamic element parameter library which includes parameter information of dynamic elements such as an electric generator, a load and a power electronic device.

Generally speaking, a computing environment is built in advance in the pre-distribution step by pre-distributing computing tasks and the fixed data, which eliminates the steps of scheduling and distributing during the process of operation and reduces the error possibility of the system. Compared with the traditional method of dynamic task distribution, the method according to the disclosure does not cost any task distributing overhead in the process of computing, and the task distributing overhead can be lowered by 100%, Data needed in the process of computing include only power grid operating data, which account for 30% of the data that are needed for the stability computation. The transmission of the fixed data and task distributing data is cancelled, which makes the computing data to be transmitted be lowered by 70% and significantly improves system stability and efficiency.

Step 12: sending power grid operating data to the computational nodes.

A management node of the parallel computing platform uses UDP (User Datagram Protocol) technique, and by means of UDP broadcasting or multicasting, sends computing data needed in the stability analysis to the computational nodes. For a system with 96 nodes, compared with the traditional point-to-point communication mechanism, the UDP technique simplifies multiple communications into a single one, improves communication efficiency by over 90 times and significantly reduces transmission time when the number of computational nodes is large. In consideration of the pre-distribution discussed above, the management node of the parallel computing platform normally only needs to broadcast the power grid operating data, which accounts for 30% of the data needed in the stability computation. Without the transmission of fixed data and task distributing data, data transmitted can be reduced by more than 70%, and transmission efficiency is significantly higher than the traditional point-to-point communication with dynamic distribution by more than 100 times.

Step 13: performing parallel computing by the computational nodes based on the power grid operating data and the fixed data.

The process of parallel computing utilizes a task-grid-based parallel computing mode which combines the task-based parallel computing mode and the grid-based computing mode. For different computing tasks, the process of parallel computing uses the task-based method, which performs computations of different computing tasks on different computational nodes so that all computing tasks can be performed at the same time; and for the same computing task, the process of parallel computing uses the grid-based method which performs computations for grids of different regions inside the task on different computing cores so that computing speed of a single task is greatly improved. Therefore, by means of pre-distribution and broadcasting of the management node, total computing time can be reduced significantly as the number of CPUs increases in the task-based parallel computing method, and a minimum threshold of computing time can be determined by the time spent in computing a task on a single processor.

By means of combining inter-node task-based parallel computing and inside-node grid-based parallel computing, computing time for a large amount of computing tasks is linearly reduced by the task-based parallel computing, and the time for computing each safety and stability analysis is reduced by the grid-based parallel computing, therefore, a computing mode with highest efficiency is obtained: for a 5000-node-level system, 2 CPUs can be used in grid-based parallel computing and 2xn CPUs may be used in task-based parallel computing for n tasks; and for a 10000-node-level system, 4 CPUs can be used in grid-based parallel computing and 4xn CPUs can be used in task-based parallel computing for n tasks.

By means of pre-distribution and broadcasting of the management node, as well as adequate CPUs, for 360 times of 20-second-long transient stability computations on a 10000-node-level power grid, the total computing time spent on 360 computing tasks can be reduced to 20 seconds by using the task-based parallel computing; and the total computing time can be further reduced to 10 seconds by using the inside-node grid-based parallel computing, which is 1000 times faster than the traditional serial computing on a single CPU which needs 3 hours in handling the same computing tasks.

At a computational node, by computing sequential control, various computing software perform computing according to a computing sequence determined by the pre-distribution. Once a computation is completed, the next one will be immediately performed without the participation of the computational node. Therefore, by means of controlling the computing sequence determined by the pre-distribution for computation of different applications, information of the pre-distribution, simplifying computing management and result retrieving control, the computing tasks pre-distributed to all computational nodes can be completed without the participation of the management node, thus the computing efficiency is improved.

Step 14: sending by the computational nodes parallel computing results to the management node.

The management node receives a signal indicating whether a state is steady or not and an unsteady-state result, collects results from all parallel computations, forms a parallel computing result file, and sends it to the EMS for result display. In the embodiment, for the computing result retrieving, the computational nodes only upload a signal indicating whether a state is steady or not to the management node, and only return an unsteady-state result, therefore, the transmission load on the management node is greatly reduced, and the stability and efficiency of the operation on the parallel computing platform are improved.

A second Embodiment

This embodiment provides a computing platform including: a management node and computational nodes; wherein the management node is used for obtaining power grid operating data, and sending the power grid operating data to the computational nodes; the computational nodes are used for configuring a task table and fixed data corresponding to respective tasks in the task table, performing a task according to the power grid operating data and the fixed data, and transmitting results of the performed task to the management node. Working principles of the management node and the computational nodes may be referred to the first embodiment.

According to an embodiment of the invention, safety and stability analysis of large-scale power grids can be performed based on data broadcasting, task pre-distribution, sequential control and utilization of large-scale parallel algorithms. By combining the task-based parallel computing mode and the grid-based parallel computing mode, the complexity of task scheduling can be simplified, the stability of the system can be improved, and a technical leap from off-line computation of power systems to online analyzing can be achieved. For example, for 1440 times of 20-second-long transient stability computations in a 10000-node-level power grid with 96 computational nodes, 384 computing cores (4 computing cores per computational node), analyzing time of the power system is reduced from 12 hours with off-line serial computation to 2 minutes with online parallel computation, which is about 360 times faster in computing velocity. A system having both highly integrated various application software and high speed computing ability can be configured, and scheduling mechanism online tracking and analyzing the safety status of power grids can be realized, which results in revolutionary effects on scheduling and operation of power grids.

While the invention has been described in conjunction with embodiments thereof that are proposed as examples, it is evident that many alternations and modifications will be apparent to those skilled in the art without departing from the spirit and scope of the invention. The scope of the invention should be defined by the claims attached herein.

## Claims

1. A parallel computing method for safety and stability analysis of a large-scale power grid, comprising
dividing computing tasks into at least two task sets, and distributing the at least two task sets and fixed data corresponding to the task sets to respective computational nodes;
sending power grid operating data to the computational nodes; and
performing parallel computing by the computational nodes, based on the power grid operating data and the fixed data.

2. The method according to claim 1, wherein dividing computing tasks into at least two task sets and distributing the at least two task sets and fixed data corresponding to the task sets to computational nodes comprises:
making statistics of computing environment information of each computational node;
pre-distributing a computing task to each computational node based on the computing environment information; and
pre-distributing the fixed data to each of the computational nodes.

3. The method according to claim 1, wherein after performing parallel computing by the computational nodes, based on the power grid operating data and the fixed data, the method further comprises:
sending parallel computing results to a management node by the computational nodes.

4. The method according to any one of claims 1-3, wherein sending power grid operating data to the computational nodes comprises: sending the power grid operating data to the computational nodes using User Datagram Protocol by means of broadcasting or multicasting.

5. A computing platform, comprising a management node and computational nodes, wherein the management node is used for obtaining power grid operating data, and sending the power grid operating data to the computational nodes;
the computational nodes are used for configuring a task table and fixed data corresponding to respective tasks in the task table, and performing a task according to the power grid operating data and the fixed data.

6. The computing platform according to claim 5, wherein the computational nodes are further used for sending results from the parallel computing to the management node.
